# EUROPEAN PATENT APPLICATION

(11) **EP 4 722 149 A1**
(43) Date of publication of application: **08.04.2026**
(21) Application number: 24815014.6
(22) Date of filing: 17.04.2024
(51) Int. Cl.: C01B 3/36

(54) **GASIFICATION DEVICE, HYDROGEN PRODUCTION SYSTEM, FUEL GENERATION SYSTEM, AND POWER GENERATION SYSTEM**

(30) Priority: 02.06.2023 JP 2023091946
(71) Applicant: Micro Energy Corporation, Atsugi-shi, Kanagawa 243-0014 (JP)
(72) Inventor: HASHIMOTO, Yoshiro, Atsugi-shi Kanagawa 243-0014 (JP)
(74) Representative: Forresters IP LLP
(86) International application number: PCT/JP2024/015338
(87) International publication number: WO 2024/247527

(57) **Abstract**

A gasification device capable of improving a gasification efficiency by causing impalpable particles in a produced gas to remain in a furnace without taking those out from the furnace, and of reducing a time necessary for the maintenance of a filter, etc., by preventing carbon compositions not gasified from flowing out. A gasification device includes a rotary kiln type horizontal gasification furnace 1, a vertical gasification furnace 2 that includes a vertical gasification furnace supplying port to supply, from the horizontal gasification furnace 1, carbon compositions not gasified, and a vertical gasification furnace ejecting port that ejects the carbon compositions not gasified, a gasification furnace discharging port 29 for discharging the gas, horizontal gasification furnace water vapor supplying means 13 and vertical gasification furnace water vapor supply means 23 for supplying water vapor in the horizontal gasification furnace 1 and in the vertical gasification furnace 2, respectively, water vapor and oxygen mixing means for mixing oxygen with the water vapor supplied to the gasification furnace, and gasification furnace heating means for heating the horizontal gasification furnace and the vertical gasification furnace, respectively.

## Description

### TECHNICAL FIELD

The present disclosure relates to a gasification device, a hydrogen production system, a fuel generation system and a power generation system to produce, from a raw material containing carbon compositions, a gas that mainly contains hydrogen and carbon monoxide.

### BACKGROUND ART

Hydrogen is getting attention in recent years as a next-generation energy among various energies. Hydrogen is utilized for fuel cell vehicles and home-use fuel cells, etc. This is because it is quite a clean energy that hardly generates carbon dioxide even utilized as a fuel. For example, hydrogen that is produced as by-products of industrial processes, like hydrogen that is produced through the production processes of caustic soda is utilizable. Moreover, hydrogen can be produced by electrolysis of water. In particular, a further clean energy can be attained when electricity derived from a renewable energy is applied.

Conversely, there is a scheme of producing hydrogen by causing a raw material containing carbon compositions to react with water vapor under a high temperature condition. For example, there is a conventional gasification device that gasifies a raw material containing carbon compositions (see Patent Document 1). Moreover, there are also fuel generation systems that produce a liquid fuel by performing Fischer-Tropsch synthesis (FT synthesis) on hydrogen and on carbon monoxide both contained in a gas produced by such a gasification device.

### CITATION LIST

### PATENT LITERATURES

Patent Document 1: WO2010/021123A

### SUMMARY OF INVENTION

### TECHNICAL PROBLEM

According to conventional gasification device, as for carbon compositions that are not gasified, in general, impalpable particles that float in a produced gas are carried, filtrated, separated and eliminated through post processes, and relatively large particles are ejected to the exterior of a furnace together with ash contents, and are loaded again in a gasification furnace or are discarded and disposed as residues. In order to reduce such residues, stirring means for prompting a reaction of carbon compositions not gasified with water vapor may be provided in the gasification furnace. However, stirring increases the reaction efficiency, and thus the gas to be produced and the amount of produced powdery dusts increase. Consequently, the flow speed in the furnace increases, and the amount of the carbon compositions not gasified and that of water vapor both carried out from the furnace together with the produced gas increase. Hence, a scheme of trapping, filtering and separating impalpable particles floating in the gas by a filter, etc., is general, but the more the amount of gas increases, the more a load is applied to structural components for a gas purification process that is a post process. Moreover, when such structural components are left as those are, pipes and filters, etc., are clogged, resulting in an inoperable condition. Since the possibility resulting in a complete deactivation increases, and thus the frequency of maintenance increases.

Hence, an objective of the present disclosure is to provide a gasification device capable of improving a gasification efficiency by causing impalpable particles in a produced gas to remain in a furnace without taking those out from the furnace, and of reducing a time necessary for the maintenance of a filter, etc., by preventing carbon compositions not gasified from flowing out. Moreover, another objective of the present disclosure is to provide a hydrogen production system, a fuel generation system and a power generation system.

### SOLUTION TO PROBLEM

In order to accomplish the above objectives, a gasification device according to the present disclosure produces a gas that mainly contains hydrogen and carbon monoxide from a raw material containing carbon compositions, and the device includes:
a rotary kiln type horizontal gasification furnace to gasify the raw material;
a vertical gasification furnace that includes a vertical gasification furnace supplying port which is connected to a horizontal gasification furnace ejecting port for a residue in the horizontal gasification furnace, and which is to supply, from the horizontal gasification furnace, the carbon compositions not gasified, and a vertical gasification furnace ejecting port that ejects the carbon compositions not gasified;
a gasification furnace discharging port for discharging the gas;
horizontal gasification furnace water vapor supplying means for supplying water vapor in the horizontal gasification furnace;
vertical gasification furnace water vapor supplying means for supplying water vapor in the vertical gasification furnace;
water vapor and oxygen mixing means for mixing oxygen with at least either one of the water vapor to be supplied to the horizontal gasification furnace or the water vapor to be supplied to the vertical gasification furnace;
horizontal gasification furnace heating means for heating the horizontal gasification furnace; and
vertical gasification furnace heating means for heating the vertical gasification furnace.

In this case, it is preferable that the gasification device should include gasification furnace temperature detecting means for detecting a temperature in the horizontal gasification furnace and a temperature in the vertical gasification furnace.

Moreover, it is preferable that the gasification device should include gasification furnace temperature controlling means for controlling the horizontal gasification furnace heating means and the vertical gasification furnace heating means based on the respective temperatures detected by the gasification furnace temperature detecting means so as to maintain an internal temperature of the horizontal gasification furnace and an internal temperature of the vertical gasification furnace to be higher than or equal to a decomposition temperature of tar.

It is preferable that the gasification furnace discharging port should be formed in a lower portion of the vertical gasification furnace.

It is preferable that the gasification device should include holding means for holding the carbon composition not gasified, and for allowing the gas to pass therethrough, the holding means being provided in the vertical gasification furnace and ahead of the gasification furnace discharging port.

It is preferable that: the horizontal gasification furnace should include a connection portion that connects the horizontal gasification furnace so as to be rotatable; and the gasification device should further include air separating means for separating nitrogen and oxygen in air from each other, for supplying the nitrogen to the connection portion as a sealant, and for supplying the oxygen in the vertical gasification furnace as an oxidization agent.

Moreover, a gasification method according to the present disclosure is to produce a gas that mainly contains hydrogen and carbon monoxide from a raw material containing carbon compositions, and this method includes:
a horizontal gasification furnace gas producing process to produce the gas by heating the raw material and water vapor in a rotary kiln type horizontal gasification furnace that gasifies the raw material;
a vertical gasification furnace gas producing process to produce the gas by heating the carbon compositions ejected from the horizontal gasification furnace and not gasified, and, water vapor in a vertical gasification furnace that includes a vertical gasification furnace supplying port which is connected to a horizontal gasification furnace ejecting port, and which is to supply, from the horizontal gasification furnace, the carbon compositions not gasified, and, a vertical gasification furnace ejecting port that ejects the carbon compositions not gasified; and
a discharging process to discharge the gas produced by the horizontal gasification furnace and by the vertical gasification furnace to the exterior of the horizontal gasification furnace and to that of the vertical gasification furnace.

A hydrogen production system according to the present disclosure includes:
the above-described gasification device; and
hydrogen separating means for separating, from a synthetic gas which is produced by the gasification device and which mainly contains hydrogen and carbon monoxide, hydrogen components so as to produce a highly pure hydrogen gas.

A fuel generation system according to the present disclosure includes:
the above-described gasification device; and
a liquid fuel obtaining device that synthesizes hydrogen and carbon monoxide produced by the gasification device so as to produce a liquid fuel.

A power generation system according to the present disclosure includes:
the above-described gasification device; and
power generating means for generating electricity by utilizing hydrogen and carbon monoxide produced by the gasification device as a fuel.

### ADVANTAGEOUS EFFECTS OF INVENTION

The gasification device according to the present disclosure traps, by a vertical gasification furnace, carbon compositions which are produced in a horizontal gasification furnace and which are not gasified, and impalpable particles in a produced gas, and prevents the carbon compositions not gasified from flowing out the furnace. This reduces a time necessary for the maintenance of a filter, etc., and thus enables an efficient gas production.

### BRIEF DESCRIPTION OF DRAWINGS

FIG. 1 is a schematic diagram illustrating a gasification device according to the present disclosure;
FIG. 2 is a schematic diagram illustrating the gasification device according to the present disclosure;
FIG. 3 is (a) a schematic diagram illustrating the gasification device according to the present disclosure and (b) a cross-sectional view of a planar ceramic heater;
FIG. 4 is a schematic diagram illustrating stirring means according to the present disclosure;
FIG. 5 is a schematic diagram illustrating carrying means according to the present disclosure;
FIG. 6 is a schematic diagram illustrating a hydrogen production system according to the present disclosure;
FIG. 7 is a schematic diagram illustrating a fuel generation system according to the present disclosure; and
FIG. 8 is a schematic diagram illustrating a liquid fuel obtaining device and a power generator according to the present disclosure.

### DESCRIPTION OF EMBODIMENTS

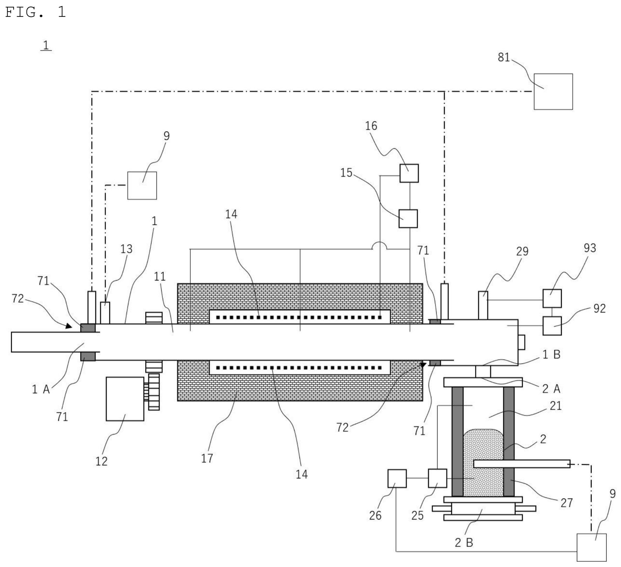

A gasification device 100 according to the present disclosure will be described with reference to FIGS. 1 to 5. The gasification device 100 according to the present disclosure is to produce a gas that mainly includes hydrogen and carbon monoxide from a raw materials 91 containing carbon compositions, and mainly includes a horizontal gasification furnace 1, a vertical gasification furnace 2, a gasification furnace discharging port 29, horizontal gasification furnace water vapor supplying means 13, vertical gasification furnace water vapor supplying means 23, water vapor and oxygen mixing means 9, horizontal gasification furnace heating means 14, and vertical gasification furnace heating means 24. Moreover, the gasification device 100 according to the present disclosure may also include gasification furnace temperature detecting means, and gasification furnace temperature controlling means.

The raw material 91 is not limited to any particular material as far as it contains at least carbon compositions, and wastes, such as food residues, woody biomass, rice hulls, agricultural residues, activated sludges, and waste plastics, are applicable. Moreover, it is preferable that these wastes should be pulverized in a predetermined size so as to facilitate an occurrence of thermal decomposition in the horizontal gasification furnace 1.

The horizontal gasification furnace 1 is a rotary kiln type, and is to gasify the raw material. The horizontal gasification furnace 1 includes a horizontal gasification furnace supplying port 1A to supply the raw materials 91, and a horizontal gasification furnace ejecting port 1B for ejecting ash contents and carbon compositions not gasified. Moreover, the horizontal gasification furnace 1 includes a horizontal gasification chamber 11 which heats therein the raw materials 91 and water vapor under an air-blocked condition, and which thermally decomposes the raw materials 91 so as to produce a gas that mainly contains hydrogen and carbon monoxide, and for example, may be formed in a cylindrical shape elongated in the horizontal direction. Furthermore, the material of the horizontal gasification furnace 1 is not limited to any particular material as far as it can withstand against the temperature and the pressure when the thermal decomposition is performed, and for example, heat-resistant stainless steel is applicable.

As for the horizontal gasification furnace supplying port 1A, for example, an opening to supply the raw materials 91 in the horizontal gasification furnace 1 may be placed in the one end of the horizontal gasification furnace 1 in the horizontal direction. Moreover, the horizontal gasification furnace supplying port 1A may be provided with raw material supplying means 94 to successively and quantitatively supply the raw materials 91. Example raw material supplying means 94 applicable is a piston or a conveyer which is actuated by pneumatic pressure or by hydraulic pressure, etc., and a rotating screw, etc., to supply the raw materials 91 into the horizontal gasification furnace 1. Moreover, the raw material suppling means 94 and the horizontal gasification furnace supplying port 1A may be each provided with a pulverizer capable of pulverizing the raw materials 91 in a predetermined size so as to facilitate an occurrence of thermal decomposition.

As for the horizontal gasification furnace ejecting port 1B, for example, an opening to eject carbon compositions not gasified and ash contents may be provided at the other end side (the opposite side to the horizontal gasification furnace supplying port 1A) of the horizontal gasification furnace 1 in the horizontal direction.

Since the horizontal gasification furnace 1 employs the above-described structure, the raw materials 91 supplied from the horizontal gasification furnace supplying port 1A are, when heated in the furnace together with water vapor under an air-blocked condition, thermally decomposed and become a gas that mainly contains hydrogen and carbon monoxide. This can be taken out from the gasification furnace discharging port 29 to be described later.

The vertical gasification furnace 2 includes a vertical gasification furnace supplying port 2A which is connected to the horizontal gasification furnace ejecting port 1B, and which is to supply, in the vertical gasification furnace 2, the carbon compositions not gasified from the horizontal gasification furnace 1, and a vertical gasification furnace ejecting port 2B that is to eject, from the vertical gasification furnace 2, ash contents and carbon compositions not gasified. Moreover, the vertical gasification furnace 2 includes a vertical gasification chamber 21 which heats therein the carbon compositions and water vapor under the air-blocked condition, thermally decomposes the carbon compositions, and produces a gas that mainly contains hydrogen and carbon monoxide, and for example, may be formed in a cylindrical shape elongated in the vertical direction. Furthermore, the material of the vertical gasification furnace 2 is not limited to any particular material as far as it can withstand against the temperature and the pressure when thermal decomposition is performed, and for example, heat-resistant stainless steel is applicable.

As for the vertical gasification furnace supplying port 2A, for example, an opening to supply, from the horizontal gasification furnace 1, the carbon compositions not gasified in the vertical gasification furnace 2 may be placed in the upper end side of the vertical gasification furnace 2.

As for the vertical gasification furnace ejecting port 2B, for example, an opening to eject carbon compositions not gasified and the ash contents may be placed in the bottom end side (the opposite side to the vertical gasification furnace supplying port 2A) of the vertical gasification furnace 2.

Since the vertical gasification furnace 2 employs the above-described structure, the carbon compositions supplied from vertical gasification furnace supplying port 2A are, when heated in the furnace under the air-blocked condition together with water vapor, thermally decomposed and become a gas that mainly contains hydrogen and carbon monoxide. This can be taken out from the gasification furnace discharging port 29 to be described later.

The gasification furnace discharging port 29 is to discharge the gas which is produced from the raw materials 91 in the horizontal gasification furnace 1 or in the vertical gasification furnace 2, and which mainly contains hydrogen and carbon monoxide to the exterior of the horizontal gasification furnace 1 and to that of the vertical gasification furnace 2. The discharged gas from the gasification furnace discharging port 29 has the hydrogen and the carbon monoxide separated from each other so as to be utilized as a gaseous fuel, or has the hydrogen and the carbon monoxide synthesized so as to be utilized as a liquid fuel. As for the gasification furnace discharging port 29, for example, an opening to discharge the produced gas may be placed in the upper portion at the other end side (the opposite side to the horizontal gasification furnace supplying port 1A) of the horizontal gasification furnace 1 in the horizontal direction, or in the lower portion of the vertical gasification furnace 2. In this case, when it is placed in the lower portion of the vertical gasification furnace 2, impalpable particles in the gas can be trapped by a filter effect accomplished by carbon compositions not gasified and ash contents both deposited at the lower portion of the vertical gasification furnace 2, and the carbon compositions not gasified can be prevented from flowing out from the furnace.

Moreover, when the gasification furnace discharging port 29 is placed in the lower portion of the vertical gasification furnace 2, holding means 22 for holding the carbon compositions not gasified and for allowing the gas to pass therethrough may be provided in the vertical gasification furnace 2 and ahead of the gasification furnace discharging port 29. This facilitates heated water vapor to uniformly pass through the held carbon compositions not gasified, improving the gasification efficiency. Moreover, an effect that facilitates the impalpable particles in the gas to be trapped is also accomplished. The holding means 22 is not limited to any particular means as far as it can hold the carbon compositions not gasified, but for example, a filter in the same shape as that of the cross-section of the vertical gasification furnace 2 is applicable. The size of the mesh and screen of the filter may be decided as appropriate in accordance with the size of the impalpable particles in the produced gas, but for example, one with 100 to 200 meshes is applicable. As for the filter, for example, a heat-resistant wire sheet like SUS, a heat-resistant fiber, or a heat-resistant mesh, etc., is applicable. Moreover, a combination of those is also applicable. Furthermore, when those are applied in solo or are combined so as to change the thickness of the holding means 22 and the volume thereof in the vertical gasification chamber 21, the loss, the trapping rate, and the passing rate, etc., can be adjusted.

The horizontal gasification furnace water vapor supplying means 13 is to supply water vapor in the horizontal gasification furnace 1. Note that from the standpoint of maintaining the internal temperature of the horizontal gasification furnace 1 to be higher than or equal to the decomposition temperature of tar, it is preferable that the horizontal gasification furnace water vapor supplying means 13 should supply heated water vapor that is heated to a temperature higher than 100°C. It is preferable that the temperature of the heated water vapor to be supplied should be higher than or equal to 170°C, more preferably, higher than or equal to the decomposition temperature (at least 950 °C) of tar. The water vapor may be generated by, for example, heating in the water vapor heating pipe of the horizontal gasification furnace water vapor supplying means 13. Moreover, it is preferable that the horizontal gasification furnace water vapor supplying means 13 should be formed so as to supply the water vapor from a different path from the horizontal gasification furnace supplying port 1A of the horizontal gasification furnace 1. The supply from the horizontal gasification furnace supplying port 1A is acceptable only when there is no possibility such that the loaded raw materials do not expand.

The vertical gasification furnace water vapor supplying means 23 is to supply water vapor in the vertical gasification furnace 2. When the gasification furnace discharging port 29 is placed in the upper end side of the vertical gasification furnace 2, it is preferable that the vertical gasification furnace water vapor supplying means 23 should be provided at the lower end side of the vertical gasification furnace 2, and when it is placed in the lower end side of the vertical gasification furnace 2, it is preferable that such means should be provided at the upper end side of the vertical gasification furnace 2. Note that from the standpoint of maintaining the internal temperature of the vertical gasification furnace 2 to be higher than or equal to the decomposition temperature of tar, it is preferable that the vertical gasification furnace water vapor supplying means 23 should supply heated water vapor that is heated to a temperature higher than 100°C. It is preferable that the temperature of the heated water vapor to be supplied should be higher than or equal to 170 °C, more preferably, higher than or equal to the decomposition temperature (at least 950 °C) of tar. The water vapor may be generated by, for example, heating in the water vapor heating pipe of the vertical gasification furnace water vapor supplying means 23. Moreover, when the supply of water vapor from the horizontal gasification furnace water vapor supplying means 13 is sufficient, the vertical gasification furnace water vapor supplying means 23 may be omitted.

The water vapor and oxygen mixing means 9 is to mix oxygen with at least either one of the water vapor to be supplied to the horizontal gasification furnace 1 or the water vapor to be supplied to the vertical gasification furnace 2. The water vapor and oxygen mixing means 9 is formed so as to be able to adjust the amount of such oxygen. The oxygen may be mixed, for example, in the water vapor heating pipe of the horizontal gasification furnace water vapor supplying means 13 or of the vertical gasification furnace water vapor supplying means 23. This improves the gasification rate. Moreover, when clogging of the holding means 22 occurs by the impalpable particles of the carbon compositions, adjustment of the amount of oxygen to be mixed with water vapor enables the carbon compositions to be burnt and eliminated. Furthermore, as for the oxygen to be mixed, oxygen separated from air by air separating means 81 to be described below may be utilized.

The horizontal gasification furnace heating means 14 is to heat the horizontal gasification furnace 1. The preferable horizontal gasification furnace heating means 14 can heat the interior of the horizontal gasification furnace 1 to be higher than or equal to the decomposition temperature of tar, e.g., higher than equal to 1000 °C, and for example, an electric heater is applicable. Application of the electric heater enables precise adjustment of the temperature in the horizontal gasification furnace 1. The plurality of electric heaters may be arranged side by side at, for example, the upper side and the lower side, respectively, of the horizontal gasification furnace 1 in the orthogonal direction of the rotation axis of the horizontal gasification furnace 1. Moreover, the gasification device 100 according to the present disclosure may include horizontal gasification furnace heat insulating means 17 which surrounds the horizontal gasification furnace 1 and the horizontal gasification furnace heating means 14, and which prevents heat from escaping therefrom.

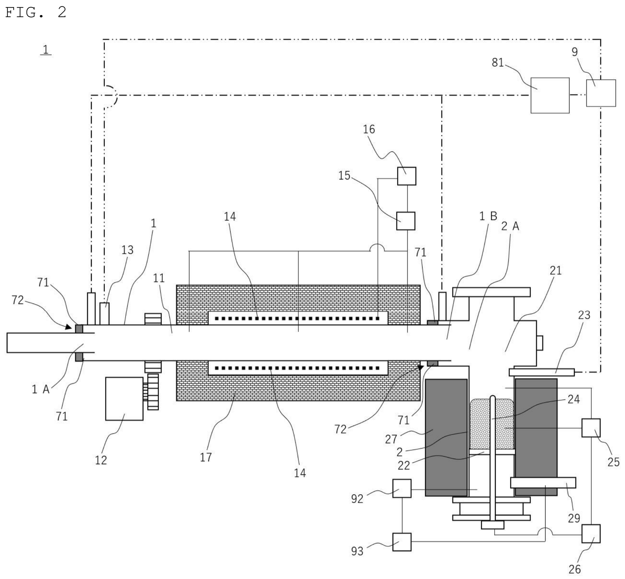

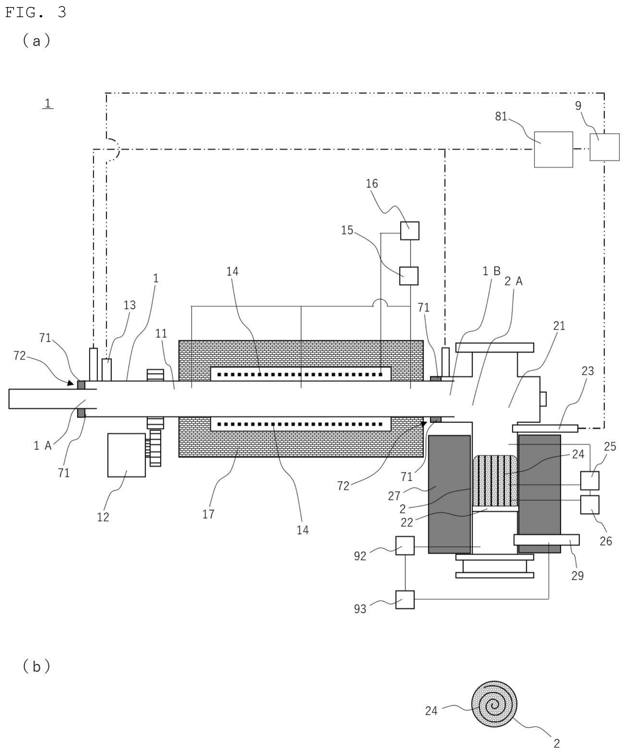

The vertical gasification furnace heating means 24 is to heat the vertical gasification furnace 2. The preferable vertical gasification furnace heating means 24 can heat the interior of the vertical gasification furnace 2 to be higher than or equal to the decomposition temperature of tar, e.g., higher than equal to 1000 °C, and for example, an electric heater is applicable. Application of the electric heater enables precise adjustment of the temperature in the vertical gasification furnace 2. For example, as illustrated in FIG. 2, an electrical heater like a radiant tube heater may be placed at the nearby position to the center axis of the vertical gasification furnace 2. Moreover, as illustrated in part (a) and part (b) of FIG. 3, an electric heater like a planar ceramic heater may be placed in a spiral shape around the center axis of the vertical gasification furnace 2. Furthermore, the above-described water vapor and oxygen mixing means 9 may be also utilized as the vertical gasification furnace heating means 24. In this case, by adjusting the amount of oxygen to be mixed with water vapor by the water vapor and oxygen mixing means 9, the vertical gasification furnace 2 can be heated. Note that the gasification device 100 according to the present disclosure may include vertical gasification furnace heat insulating means 27 which surrounds the vertical gasification furnace 2 and the vertical gasification furnace heating means 24, and which prevents heat from escaping.

Moreover, the gasification device 100 according to the present disclosure may include gas suction means to suction the produced gas. The gas suction means is to suction the gas produced in the horizontal gasification furnace 1 and in the vertical gasification furnace 2 to the exterior of such furnaces via the gasification furnace discharging port 29, enabling adjustment of the discharging amount from the horizontal gasification furnace 1 and from the vertical gasification furnace 2. The gas suction means is not limited to any particular means as far as it can suction the gas produced in the horizontal gasification furnace 1 and in the vertical gasification furnace 2 to the exterior of such furnaces via the gasification furnace discharging port 29, but for example, the gas may be suctioned to the exterior of such furnaces via the gasification furnace discharging port 29 using a suction blower.

Furthermore, the gasification device 100 according to the present disclosure may include pressure detecting means 92 for detecting the pressure of the gas in the horizontal gasification furnace 1 and in the vertical gasification furnace 2. The pressure detecting means 92 is not limited to any particular means as far as it can detect the pressure of the gas in the horizontal gasification furnace 1 and in the vertical gasification furnace 2, and conventionally well-known means is applicable.

Still further, the gasification device 100 according to the present disclosure may include pressure controlling means 93 for controlling the gas suction means based on the detected pressure by the pressure detecting means 92, and for adjusting the discharging amount from the gasification furnace discharging port 29 so as to maintain the pressure in the horizontal gasification furnace 1 and in the vertical gasification furnace 2 to be within a certain range. For example, pressure sensors may be provided at the respective nearby portions to the horizontal gasification furnace supplying port 1A, the vertical gasification furnace supplying port 2A, and the gasification furnace discharging port 29 to detect pressure, and the pressure in the horizontal gasification furnace 1 and in the vertical gasification furnace 2 may be adjusted so as to be within a certain range relative to atmospheric pressure.

The above-described holding means 22 may cause clogging due to the impalpable particles of the carbon compositions. In this case, the pressure in the vertical gasification furnace 2 increases due to clogging. Hence, the pressure controlling means 93 may control the water vapor and oxygen mixing means 9 based on the detected pressure by the pressure detecting means 92, and may adjust the amount of oxygen to be mixed with water vapor to be supplied to the vertical gasification furnace 2. Hence, by making adjustment in such a way that the amount of oxygen to be mixed with water vapor increases, the impalpable particles of the carbon compositions that are causing the clogging of the holding means 22 can be burned and eliminated.

The gasification device 1 according to the present disclosure may include heat exchange means 101 for changing heat between the produced gas and water that becomes water vapor which is supplied from the horizontal gasification furnace water vapor supplying means 13 or from the vertical gasification furnace water vapor supplying means 23. For example, the sensible heat of the high-temperature (e.g., 1000 °C) gas discharged from the gasification furnace discharging port 29 may be collected by a heat exchanger, etc., the temperature of the gas may be cooled down to 200 to 300 °C, and water may be heated by utilizing the collected heat so as to generate water vapor to be supplied from the horizontal gasification furnace water vapor supplying means 13 or from the vertical gasification furnace water vapor supplying means 23.

Moreover, rotating means 12 for rotating the horizontal gasification furnace 1 may be provided. This enables the carbon compositions therein to be stirred so as to turn over the front surface and the bottom portion. Consequently, more carbon compositions are allowed to contact the water vapor, and thus effective gasification can be performed. Furthermore, the rotating means 12 may be utilized as a power source for carrying means 4 to be described later. Example rotating means 12 is a rotational driving device like a motor that rotates the horizontal gasification furnace 1 around the predetermined rotation axis of such a furnace.

Still further, the horizontal gasification furnace 1 includes a connection portion 72 that connects the horizontal gasification furnace 1 to a non-rotational portion so as to be rotatable relative to such a portion. As for the connection portion 72, a seal 71 is provided between the horizontal gasification furnace 1 and the non-rotational portion, but in order to ensure further sealing, it is preferable that an inert gas like a nitrogen gas should be provided around the connection portion 72 of the horizontal gasification chamber 11. Air separating means 81 may be utilized to supply the nitrogen gas. The air separating means 81 is to separate nitrogen in air from oxygen therein. The separated nitrogen by the air separating means 81 is supplied to the connection portion 72, and is utilized for sealing of the connection portion 72. Moreover, the separated oxygen by the air separating means 81 may be utilized as oxygen to be mixed with water vapor by the water vapor and oxygen mixing means 9. By supplying oxygen in the gasification furnace so as to be utilized as the oxidization agent for carbon, in comparison with a case in which air is utilized as such an oxidization agent, the gasification efficiency is improved and it can be utilized as a heat source for internal heating in the gasification furnace without allowing the nitrogen gas to remain therein. The air separating means 81 is not limited to any particular means as far as it can separate nitrogen in air from oxygen therein, but for example, a commercially available nitrogen generator of a type that discharges oxygen may be applied.

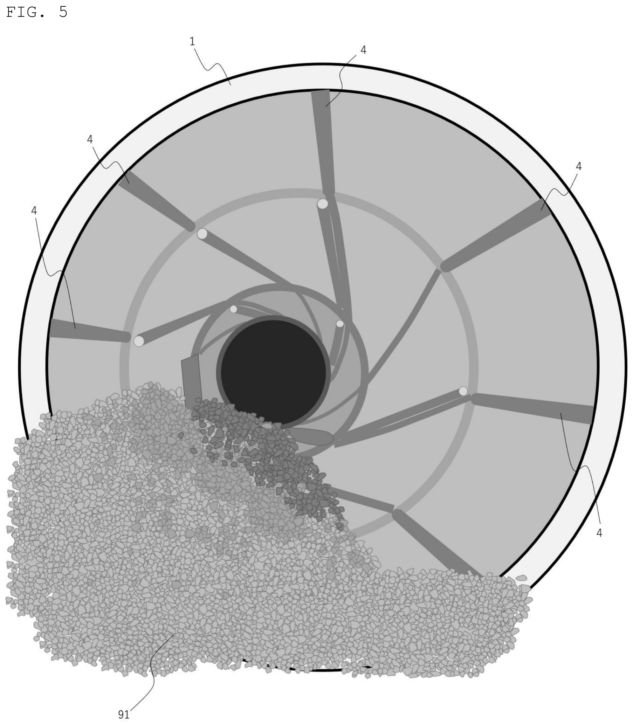

Moreover, the horizontal gasification furnace 1 may include the carrying means 4. The carrying means 4 is to send carbon compositions deposited on the bottom inside the horizontal gasification furnace 1 to the horizontal gasification furnace ejecting port 1B. More preferably, the carrying means 4 is to send such compositions to the horizontal gasification furnace ejecting port 1B while stirring a certain amount of the carbon compositions deposited on the bottom inside the horizontal gasification furnace 1. The carrying means 4 is not limited to any particular one as far as it can send the carbon compositions deposited on the bottom inside the horizontal gasification furnace 1 to the horizontal gasification furnace ejecting port 1B, but for example, as illustrated in FIG. 5, a screw that has a plurality of convexities each formed in a spiral shape from the horizontal gasification furnace supplying port 1A to the horizontal gasification furnace ejecting port 1B on the internal wall of the horizontal gasification furnace 1 may be applied. Accordingly, since such convexities rotate together with the rotation of the horizontal gasification furnace 1 by the rotating means 12, the carbon compositions are scooped by the convexities and are stirred, and are sent to the horizontal gasification furnace ejecting port 1B. Note that the convexities may be formed integrally with the internal wall of the horizontal gasification furnace 1, or bars or pipes may be placed side by side in a spiral shape. Furthermore, the dimension of the convexity may be designed as appropriate based on the dimension of the horizontal gasification furnace 1, the rotating speed thereof, and the gasification efficiency of the carbon compositions, etc., but for example, one that has a height of 50 to 100 mm relative to the internal wall of the horizontal gasification furnace 1 may be adopted.

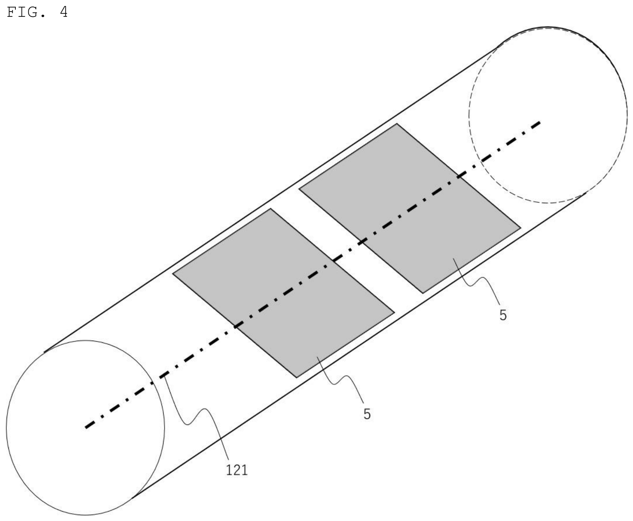

Still further, as illustrated in FIG. 4, the gasification device 100 according to the present disclosure may include stirring means 5 for stirring, in the internal space of the horizontal gasification furnace 1, carbon compositions deposited on the bottom inside the horizontal gasification furnace 1. By scooping the carbon compositions deposited on the bottom inside the horizontal gasification furnace 1 upwardly from the bottom inside the furnace to cause such compositions to fall, the impalpable particles in the carbon compositions are caused to float in the gas in the internal space of the furnace. This increases the opportunities of contacting with water vapor and the contact surface area thereto, and thus a reaction is prompted. The stirring means 5 is not limited to any particular one as far as it can stir, in the internal space at the center of the horizontal gasification furnace 1, the carbon compositions deposited on the bottom inside the horizontal gasification furnace 1, but for example, a mesh that is placed horizontally relative to a rotation axis 121 of the horizontal gasification furnace 1 in such a furnace may be applied. More specifically, a heat-resistant wire sheet like SUS is applicable as the stirring means 5. The mesh size of the stirring means 5 may be decided as appropriate in accordance with a desired amount of carbon compositions scooped up in the internal space of the horizontal gasification furnace 1 with the gasification efficiency, etc., for the carbon compositions being taken into consideration.

Yet still further, the gasification device 100 according to the present disclosure may include gasification furnace temperature detecting means for detecting either one or both of the temperatures of the horizontal gasification furnace 1 and the vertical gasification furnace 2. The gasification furnace temperature detecting means includes, for example, horizontal gasification furnace temperature detecting means 15 for detecting the internal temperature of the horizontal gasification furnace 1, and vertical gasification furnace temperature detecting means 25 for detecting the internal temperature of the vertical gasification furnace 2.

The horizontal gasification furnace temperature detecting means 15 is not limited to any particular means as far as it can detect the internal temperature of the horizontal gasification furnace 1, but for example, a thermocouple is applicable. Moreover, the horizontal gasification furnace temperature detecting means 15 is formed so as to be electrically connected to horizontal gasification furnace temperature controlling means 16 to be described later, and to transmit detection information to the horizontal gasification furnace temperature controlling means 16. Note that in order to precisely grasp the overall temperature inside the horizontal gasification furnace 1, it is preferable that the horizontal gasification furnace temperature detecting means 15 should be placed at multiple sites from the horizontal gasification furnace supplying port 1A side of the horizontal gasification furnace 1 to the horizontal gasification furnace ejecting port 1B side thereof. Furthermore, the horizontal gasification furnace temperature detecting means 15 may be placed at multiple sites from the upper portion of the horizontal gasification furnace 1 to the lower portion thereof.

Moreover, the vertical gasification furnace temperature detecting means 25 is not limited to any particular means as far as it can detect the internal temperature of the vertical gasification furnace 2, but for example, a thermocouple is applicable. Furthermore, the vertical gasification furnace temperature detecting means 25 is formed so as to be electrically connected to vertical gasification furnace temperature controlling means 26 to be described later, and to transmit detection information to the vertical gasification furnace temperature controlling means 26. Note that in order to precisely grasp the overall temperature inside the vertical gasification furnace 2, it is preferable that the vertical gasification furnace temperature detecting means 25 should be placed at multiple sites from the vertical gasification furnace supplying port 2A side of the vertical gasification furnace 2 to the vertical gasification furnace ejecting port 2B side thereof. Still further, the vertical gasification furnace temperature detecting means 25 may be placed at multiple sites around the vertical gasification furnace 2.

Furthermore, the gasification device 100 according to the present disclosure may include the gasification furnace temperature controlling means for controlling the horizontal gasification furnace heating means and the vertical gasification furnace heating means based on the detected temperature by the gasification furnace temperature detecting means so as to maintain the internal temperature of the horizontal gasification furnace and that of the vertical gasification furnace to be higher than or equal to the decomposition temperature of tar. The gasification furnace temperature controlling means includes, for example, horizontal gasification furnace temperature controlling means 16 and vertical gasification furnace temperature controlling means 26, etc.

The horizontal gasification furnace temperature controlling means 16 controls the horizontal gasification furnace heating means 14 based on the detected temperature by the horizontal gasification furnace temperature detecting means 15 so as to maintain at least the horizontal gasification furnace ejecting port 1B side in the horizontal gasification furnace 1 to be higher than or equal to the decomposition temperature of tar. For example, a computer is applied as the horizontal gasification furnace temperature controlling means 16, and a predetermined temperature that is higher than or equal to the decomposition temperature of tar is set in this computer in advance. Next, a signal based on a deviation between the set temperature and the actual temperature detected by a thermocouple is transmitted to the horizontal gasification furnace heating means 14 by PID control, etc., and, the temperature in the horizontal gasification furnace 1 is controlled by adjusting the output by the horizontal gasification furnace heating means 14. The set temperature may be higher than or equal to the decomposition temperature of tar, e.g., higher than or equal to 1000 °C. Note that with the heat-resistant temperature of the horizontal gasification furnace 1 being taken into consideration, the upper limit value of the heating temperature may be also set. Moreover, when a catalyst that decreases the decomposition temperature of tar is placed in the horizontal gasification furnace 1, the decomposition temperature of tar can be decreased. In this case, a further low set temperature can be selected, and it can be maintained so as to be higher than or equal to the decomposition temperature of tar in a case in which the catalyst is applied. This enables the temperature in the horizontal gasification furnace 1 to be precisely maintained so as to be higher than or equal to the decomposition temperature of tar, enabling the thermal decomposition of tar to be surely carried out, and thus it can be suppressed that tar, etc., is to be contained in the produced gas.

The vertical gasification furnace temperature controlling means 26 controls the vertical gasification furnace heating means 24, the air separating means 81 or the water vapor and oxygen mixing means 9 based on the detected temperature by the vertical gasification furnace temperature detecting means 25 so as to maintain at least the vertical gasification furnace ejecting port 2B side in the vertical gasification furnace 2 to be higher than or equal to the decomposition temperature of tar. The vertical gasification furnace temperature controlling means 26 adjusts heat and the amount of oxygen supplied in the vertical gasification furnace 2 so as to cause the carbon compositions not gasified to be oxidized, and also heats the interior of the vertical gasification furnace. As for a control scheme, for example, a computer is utilized as the vertical gasification furnace temperature controlling means 26, and a predetermined temperature that is higher than or equal to the decomposition temperature of tar is set in this computer in advance. Next, a signal based on a deviation between the set temperature and the actual temperature detected by a thermocouple is transmitted to the vertical gasification furnace heating means 24, the air separating means 811 or the water vapor and oxygen mixing means 9 by PID control, etc., so as to adjust the output by the vertical gasification furnace heating means 24, the air separating means 81 or the water vapor and oxygen mixing means 9. Hence, heat and the supply amount of oxygen to the interior of the vertical gasification furnace 2 are controlled, and thus the internal temperature of the vertical gasification furnace 2 is controlled. The set temperature may be higher than or equal to the decomposition temperature of tar, e.g., higher than or equal to 1000 °C. Note that with the heat-resistant temperature of the vertical gasification furnace 2 being taken into consideration, the upper limit value of the oxygen supply amount may be set in advance. Moreover, when a catalyst that decreases the decomposition temperature of tar is placed in the vertical gasification furnace 2, the decomposition temperature of tar can be decreased. In this case, a further low set temperature can be selected, and it can be maintained so as to be higher than or equal to the decomposition temperature of tar in a case in which the catalyst is applied. This enables the temperature in the vertical gasification furnace 2 to be precisely maintained so as to be higher than or equal to the decomposition temperature of tar, enabling the thermal decomposition of tar to be surely carried out, and thus it can be suppressed that tar, etc., is to be contained in the produced gas. Hence, a gas purification device and a gas reforming device for eliminating tar components, etc., become unnecessary when the gasification device 100 includes the horizontal gasification furnace temperature controlling means 16 and the vertical gasification furnace temperature controlling means 26.

Next, a gasification method (a gas producing process) according to the present disclosure using the above-described gasification device 100 will be described.

The gasification method according to the present disclosure is a method for producing a gas that mainly contains hydrogen and carbon monoxide from the raw materials 91 containing carbon compositions, and mainly includes a horizontal gasification furnace gas producing process, a vertical gasification furnace gas producing process, and a discharging process.

The horizontal gasification furnace gas producing process is to heat the raw materials 91 containing carbon compositions and water vapor in the rotary kiln type horizontal gasification furnace 1 that includes the horizontal gasification furnace supplying port for supplying therein the raw materials 91, and the horizontal gasification furnace ejecting port 1B for ejecting the carbon compositions not gasified, and is to produce a gas. The gas can be produced by maintaining the raw materials 91 containing the carbon compositions, and water vapor so as to be higher than or equal to the decomposition temperature of tar in an air-blocked state. As for the water vapor, heated water vapor is preferable. Moreover, the water vapor may be mixed with oxygen.

The vertical gasification furnace gas producing process is to heat the carbon composition not gasified and ejected from the horizontal gasification furnace 1, and water vapor in the vertical gasification furnace 2 that includes the vertical gasification furnace supplying port 2A which is connected to the horizontal gasification furnace ejecting port 1B and which is for supplying, from the horizontal gasification furnace 1, the carbon compositions not gasified, and the vertical gasification furnace ejecting port 2B for ejecting the carbon compositions not gasified, and is to produce a gas. A gas can be produced by maintaining the carbon compositions not gasified and ejected from the horizontal gasification furnace 1 and the water vapor so as to be higher than or equal to the decomposition temperature of tar in an air-blocked state. As for the water vapor, heated water vapor is preferable. Moreover, the water vapor may be mixed with oxygen.

The discharging process is to discharge the gas produced in the horizontal gasification furnace 1 and in the vertical gasification furnace 2 to the exterior of the horizontal gasification furnace 1 and that of the vertical gasification furnace 2. In this example, the discharging process may be to discharge the gas by suctioning it from the gasification furnace discharging port 29. Hence, the constant internal pressure of the furnace can be maintained. The discharged gas may be utilized as a gaseous fuel by separating hydrogen from carbon monoxide, or may be utilized as a liquid fuel by synthesizing hydrogen and carbon monoxide.

The gasification method according to the present disclosure may include a stirring process to stir the carbon compositions deposited on the bottom in the horizontal gasification furnace 1 in the space at the center of the horizontal gasification furnace 1. By scooping up the carbon compositions deposited on the bottom in the horizontal gasification furnace 1 in air, a surface area at which the carbon composition contacts the water vapor increases, and thus a reaction is prompted. The stirring process may be performed in any way as far as the carbon compositions deposited on the bottom in the horizontal gasification furnace 1 can be stirred in the space at the center of the horizontal gasification furnace 1, but for example, may be performed using the above-described stirring means 5. More specifically, as the stirring means 5, a filter may be placed in the horizontal gasification furnace 1 so as to be horizontal with the rotation axis. As for the filter, for example, a heat-resistant wire sheet like SUS, a heat-resistant fiber, or a heat-resistant mesh is applicable. Moreover, those can be applied in a combined manner. The mesh size may be decided as appropriate in accordance with the size of the impalpable particles in the produced gas.

Moreover, the gasification method according to the present disclosure may include a carrying process to carry, while stirring, the certain amount of carbon compositions deposited on the bottom in the horizontal gasification furnace 1 to the horizontal gasification furnace ejecting port 1B. This enables stirring and carrying to be performed simultaneously, thus assisting the above-described stirring process. The stirring and carrying processes may be performed in any way as far as the certain amount of the carbon compositions deposited on the bottom in the horizontal gasification furnace 1 is carried to the horizontal gasification furnace ejecting port 1B while being stirred, but for example, the above-described carrying means 4 is applicable. More specifically, as the carrying means 4, a screw formed in a spiral shape on the inner surface of the horizontal gasification furnace 1 is applicable. Hence, the carbon compositions are spontaneously carried to the horizontal gasification furnace ejecting port 1B by such a screw while being stirred by utilizing the rotation of the horizontal gasification furnace 1 by the rotating means 12.

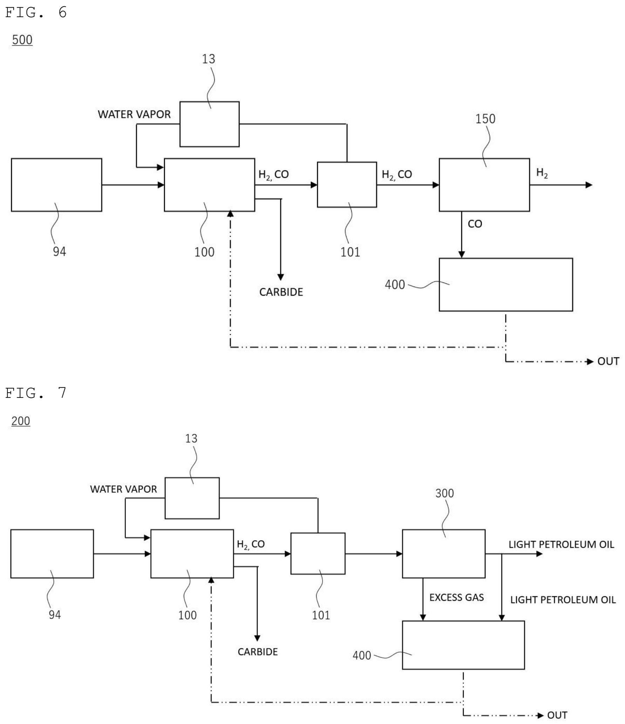

Next, a hydrogen production system 500 in which the gasification device 100 according to the present disclosure is incorporated will be described with reference to FIG. 6. The hydrogen production system according to the present disclosure mainly includes the above-described gasification device 100 according to the present disclosure, and hydrogen separating means 150.

In this example, the hydrogen separating means 150 is to separate hydrogen components from a synthetic gas which is produced by the gasification device 100 and which contains hydrogen and carbon monoxide. The hydrogen separating means 150 is not limited to any particular means as far as it can separate hydrogen, but for example, it may be a device that separates hydrogen by a gas purification scheme that is a so-called Pressure Swing Adsorption (PSA).

The hydrogen production system 500 separates hydrogen components from a synthetic gas which is obtained by the gasification device 100 and which contains hydrogen and carbon monoxide, and produces a highly pure hydrogen gas. Moreover, power generating means 400 for generating electric power by utilizing the excess gas produced by the hydrogen production system 500 may be provided.

Next, a fuel generation system 200 in which the gasification device 100 according to the present disclosure is incorporated will be described with reference to FIG. 7. The fuel generation system 200 according to the present disclosure mainly includes the above-described gasification device 100 according to the present disclosure, and a liquid fuel obtaining device 300 that synthesizes hydrogen produced by the gasification device 100 with carbon monoxide so as to produce a liquid fuel. Moreover, the power generating means 400 may be further provided which generates electric power by utilizing a fuel that is an excess gas generated by the liquid fuel obtaining device 300. Needless to say, the liquid fuel obtaining device 300 that produces a liquid fuel may be omitted and the whole amount of a produced gas may be supplied to the power generating means 400.

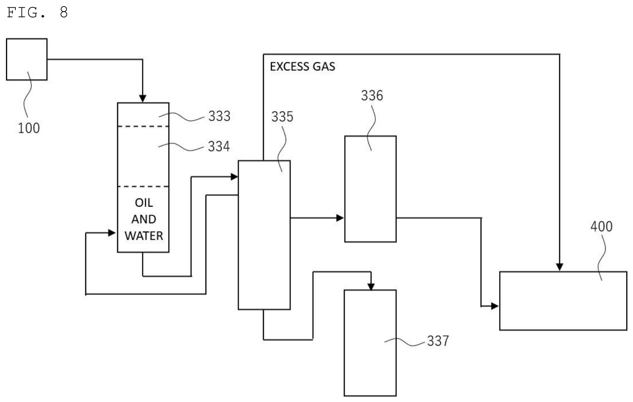

The liquid fuel obtaining device 300 changes hydrogen and carbon monoxide obtained by the gasification device 100 into a liquid fuel by a Fischer-Tropsch (will be described as FT below) process. Conventionally well-known devices that can perform FT synthesis are applicable as the liquid fuel obtaining device 300. An example process flow (a liquid fuel obtaining process) using the liquid fuel obtaining device 300 will be described with reference to FIG. 8.

The produced gas by the gasification device 100 and having undergone a gas purification process is blown into an FT synthesis unit 333 to eliminate unnecessary components, and is caused to pass through an FT synthesis catalyst 334 to perform FT synthesis. Consequently, a light petroleum oil that becomes a liquid fuel and water are produced. As for the FT synthesis, since the quality remarkably relies on the performance of the FT synthesis catalyst 334, it is preferable that the FT synthesis catalyst 334 should be one that accomplishes a high carbon monoxide inversion rate and a high chain growth probability.

The light petroleum oil and the water are introduced in a cooling and separating unit 335 so as to be separated from each other. The separated light petroleum oil is collected in an oil tank 336, the water is collected as hot water through a water tank 337, and the unseparated components are returned to the FT synthesis unit 333 to repeat the above processes.

Moreover, the fuel generation system 200 may be combined with the power generating means 400 for generating electric power (an electric power generating process) using the excess gas produced by the liquid fuel obtaining device 300 or the light petroleum oil collected in the oil tank 336 as a fuel. As for the power generating means 400, a power generator, a micro gas turbine power generator, a fuel cell, etc., may be applied.

When the horizontal gasification furnace heating means 14 of the gasification device 100 and the vertical gasification furnace heating means 24 thereof are utilized as electric heaters, and when electricity generated by the power generating means 400 is utilized by such electric heaters, it becomes unnecessary to additionally prepare a power supply for the gasification device 100, and thus the fuel generation system 200 can be operated as an externally independent system. In this case, the fuel generation system 200 becomes also available at a region like a rural part of a less-developed country where there are the sufficient raw materials 91 like woody biomass or agricultural residue but electricity relevant facilities are insufficient.

### REFERENCE SIGNS LIST

- 1: Horizontal gasification furnace
- 1A: Horizontal gasification furnace supplying port
- 1B: Horizontal gasification furnace ejecting port
- 2: Vertical gasification furnace
- 2A: Vertical gasification furnace supplying port
- 2B: Vertical gasification furnace ejecting port
- 4: Carrying means
- 5: Stirring means
- 9: Water vapor and oxygen mixing means
- 11: Horizontal gasification chamber
- 12: Rotating means
- 13: Horizontal gasification furnace water vapor supplying means
- 14: Horizontal gasification furnace heating means
- 15: Horizontal gasification furnace temperature detecting means
- 16: Horizontal gasification furnace temperature controlling means
- 17: Horizontal gasification furnace heat insulating means
- 21: Vertical gasification chamber
- 22: Holding means
- 23: Vertical gasification furnace water vapor supplying means
- 24: Vertical gasification furnace heating means
- 25: Vertical gasification furnace temperature detecting means
- 26: Vertical gasification furnace temperature controlling means
- 27: Vertical gasification furnace heat insulating means
- 29: Gasification furnace discharging port
- 71: Seal
- 72: Connection portion
- 81: Air separating means
- 91: Raw material
- 92: Pressure detecting means
- 93: Pressure controlling means
- 94: Raw material supplying means
- 100: Gasification device
- 101: Heat exchange means
- 150: Hydrogen separating means
- 200: fuel generation system
- 300: Liquid fuel obtaining means
- 333: FT synthesis unit
- 334: FT synthesis catalyst
- 335: Cooling and separating unit
- 336: Oil tank
- 337: Water tank
- 400: Power generating means
- 500: Hydrogen production system

## Claims

1. A gasification device that produces a gas that mainly contains hydrogen and carbon monoxide from a raw material containing carbon compositions, the device comprising:
a rotary kiln type horizontal gasification furnace to gasify the raw material;
a vertical gasification furnace that includes a vertical gasification furnace supplying port which is connected to a horizontal gasification furnace ejecting port for a residue in the horizontal gasification furnace, and which is to supply, from the horizontal gasification furnace, the carbon compositions not gasified, and a vertical gasification furnace ejecting port that ejects the carbon compositions not gasified;
a gasification furnace discharging port for discharging the gas;
horizontal gasification furnace water vapor supplying means for supplying water vapor in the horizontal gasification furnace;
vertical gasification furnace water vapor supplying means for supplying water vapor in the vertical gasification furnace;
water vapor and oxygen mixing means for mixing oxygen with at least either one of the water vapor supplied to the horizontal gasification furnace or the water vapor supplied to the vertical gasification furnace;
horizontal gasification furnace heating means for heating the horizontal gasification furnace;
vertical gasification furnace heating means for heating the vertical gasification furnace;
gasification furnace temperature detecting means for detecting a temperature in the horizontal gasification furnace and a temperature in the vertical gasification furnace; and
gasification furnace temperature controlling means for controlling the horizontal gasification furnace heating means and the vertical gasification furnace heating means based on the respective temperatures detected by the gasification furnace temperature detecting means so as to maintain an internal temperature of the horizontal gasification furnace and an internal temperature of the vertical gasification furnace to be higher than or equal to a decomposition temperature of tar.

2. The gasification device according to claim 1, wherein the gasification furnace discharging port is formed in a lower portion of the vertical gasification furnace.

3. The gasification device according to claim 2, further comprising holding means for holding the carbon composition not gasified, and for allowing the gas to pass therethrough, the holding means being provided in the vertical gasification furnace and ahead of the gasification furnace discharging port.

4. The gasification device according to any one of claims 1 to 3, wherein:
the horizontal gasification furnace comprises a connection portion that connects the horizontal gasification furnace so as to be rotatable; and
the gasification device further comprises air separating means for separating nitrogen and oxygen in air from each other, for supplying the nitrogen to the connection portion as a sealant, and for supplying the oxygen in the vertical gasification furnace as an oxidization agent.

5. A hydrogen production system comprising:
the gasification device according to any one of claims 1 to 3; and
hydrogen separating means for separating, from a synthetic gas which is produced by the gasification device and which mainly contains hydrogen and carbon monoxide, hydrogen components so as to produce a highly pure hydrogen gas.

6. A fuel generation system comprising:
the gasification device according to any one of claims 1 to 3; and
a liquid fuel obtaining device that synthesizes hydrogen and carbon monoxide produced by the gasification device so as to produce a liquid fuel.

7. A power generation system comprising:
the gasification device according to any one of claims 1 to 3; and
power generating means for generating electricity by utilizing hydrogen and carbon monoxide produced by the gasification device as a fuel.
